# EUROPÄISCHE PATENTSCHRIFT

(11) **EP 3 953 646 B1**
(45) Veröffentlichungstag und Bekanntmachung des Hinweises auf die Patenterteilung: **29.03.2023**
(21) Anmeldenummer: 20700778.2
(22) Anmeldetag: 09.01.2020
(51) Int. Cl.: F24H 1/16, B60H 1/00, F24H 1/00, H05B 3/48

(54) **ELEKTRISCHES HEIZGERÄT**
ELECTRIC HEATING DEVICE
APPAREIL DE CHAUFFAGE ÉLECTRIQUE

(30) Priorität: 31.05.2019 DE 102019003811
(43) Veröffentlichungstag der Anmeldung: 16.02.2022
(73) Patentinhaber: Valeo Thermal Commercial Vehicles Germany GmbH, 82205 Gilching (DE)
(72) Erfinder: BOEDE, Sebastian, 17039 Neverin (DE); DALESKE, Danilo, 17498 Guest (DE); SCHINKEL, Christian, 17033 Neubrandenburg (DE)
(74) Vertreter: Strasser, Wolfgang
(86) Internationale Anmeldenummer: PCT/EP2020/050467
(87) Internationale Veröffentlichungsnummer: WO 2020/239271

(56) Entgegenhaltungen:
- DE-B- 1 286 281
- DE-C- 317 534
- DE-C1- 3 903 649
- US-A1- 2003 138 244

## Beschreibung

Die Erfindung betrifft ein elektrisches Heizgerät gemäß dem Oberbegriff von Anspruch 1.

Solche Heizgeräte sind aus dem Stand der Technik bekannt, beispielsweise aus der DE 10 2017 100 019 A1 oder der US 2012 315 024 A.

Aus der DE 39 30 694 C1 ist ein Heizgerät mit einem Rohrheizkörper bekannt, der im Inneren eines von dem aufzuheizenden Medium durchströmten Gehäuses angeordnet ist, dessen Außenwand von einem Mantel gebildet wird, der aus einem auf eine Blechmanschette aufgespritzten Kunststoff besteht. Die Blechmanschette weist eine sich in axialer Richtung erstreckende, schraubenlinienförmige, zum Innenraum der Heizkammer hin konkave Sicke auf, die mit dem Rohrheizkörper so verpresst ist, dass sie seine Windungen eng anliegend umschließt. Dadurch ist sie zum Innenraum der Heizkammer hin verschlossen und der Rohrheizkörper kommt nur einseitig mit dem aufzuheizenden Medium in Berührung.

Die DE 1 286 281 zeigt eine elektrische Heizeinrichtung für einen Wasserdurchlauferhitzer mit zwei zueinander konzentrisch angeordneten Hohlzylindern und zwei Heizeinrichtungen, die als gewendelte Mantelrohrheizstäbe ausgebildet sind, von denen der eine auf die mit schraubenförmigen, zur Außenseite hin offenen Rillen versehene Außenfläche des äußeren Hohlzylinders aufgewickelt ist, während der andere in das Innere des inneren Hohlzylinders konzentrisch hineinragt, der von dem aufzuheizenden Wasser durchströmt wird und eine zylindrisch-glatte Innenwand aufweist. Die Zufuhr des Wassers erfolgt über einen Wasserzuführstutzen und ein diesen fortsetzendes Verlängerungs-Rohrstück, das sich von oben her eintretend konzentrisch durch den inneren Hohlzylinder erstreckt und knapp über dessen Bodenplatte endet. Dort kehrt das aus dem Verlängerungs-Rohrstück austretende Wasser seine Strömungsrichtung um, und strömt zurück von unten nach oben, um von dort durch in der Wand des inneren Hohlzylinders ausgebildete Wasseraustrittsöffnungen in einen wendelförmigen Wasserdurchflusskanal einzutreten, der sich zwischen dem inneren und dem äußeren Hohlzylinder befindet. Diesen Kanal durchströmt das Wasser von oben nach unten, um schließlich durch einen Wasserauslaufstutzen abgegeben zu werden.

Die DE 317 534 beschreibt einen elektrischen Heizkörper für strömende Flüssigkeit, bei welchem die den Heizdraht aufnehmenden Windungen eines elastischen Spiralrohrs durch ein Mantelrohr abgedeckt sind. Dabei erfolgt die Berührung der zu erwärmenden Flüssigkeit mit dem Heizkörper sowohl auf der Fläche des Spiralrohres als auch auf der Fläche des Mantelrohrs.

Die US 2003/01 38244 A1 beschreibt ein mit einem zirkulierenden Fluid arbeitendes Heizsystem, bei dem das zu erhitzende Fluid in einem als Wärmetauscher bezeichneten Heizgerät zwischen einem den Heizkörper bildenden Innenrohr und einem hierzu konzentrischen, holen Außenrohr hindurchströmt, zwischen denen nur ein geringer Abstand vorhanden ist_ Dieser Freiraum zwischen den beiden Rohren weist pro Längeneinheit nur ein äußerst geringes Volumen auf und bildet keine Kammer in der sich ein schraubenlinienförmiger Wendelabschnitt des Heizkörper-Mantelrohrs erstrecken könnte. Die Innenwand des Außenrohrs ist kreiszylindrisch glatt ausgebildet und weist keine zum Inneren hin konkave Sicke auf. Um pro Zeiteinheit ein großes Fluidvolumen erhitzen zu können, müssen das Innen- und das hierzu konzentrische Außenrohr eine erhebliche Länge besitzen.

Ein grundsätzliches Problem bei den bekannten Heizgeräten besteht darin, einerseits eine möglichst kleine Bauform zu erzielen und andererseits eine möglichst vollständige und gleichförmige Durchströmung der gesamten Heizkammer zu erreichen, um zu vermeiden, dass in der Heizkammer Volumenbereiche entstehen, in denen das üblicherweise von Wasser gebildete Fluid in verringertem Maße an der allgemeinen Strömung vom Zuführstutzen zum Abführstutzen teilnimmt oder durch eine zu hohe Strömungsgeschwindigkeit für kürzere Zeit als andere Teilvolumina mit dem Heizkörper in Berührung kommt und sich daher weniger aufheizt. Es soll ein möglichst guter, gleichförmiger Wärmekontakt zwischen dem gesamten Mantelrohr des Heizkörpers und dem gesamten Fluid erreicht und die Bildung von überhitzten bzw. zu wenig erwärmten Fluid-Teilvolumina vermieden werden.

Zur Lösung dieser Aufgabe sieht die Erfindung die im Anspruch 1 zusammengefassten Merkmale vor.

Dadurch, dass auf der Innenseite der zylindrischen Wand der Heizkammer eine sich über diese Wand spiral- bzw. schraubenlinienförmig erstreckende konkave Nut bzw. Sicke mit einem zur Innenseite der Heizkammer hin offenen Querschnitt ausgebildet ist, die den gleichen Windungssinn und die gleiche Steigung wie der ihr jeweils unmittelbar benachbarte Wendelabschnitt des Heizkörpers aufweist, entsteht zwischen der Außenseite des Wendelabschnitts und der Innenwand der Heizkammer ein schraubenlinienförmiger Strömungs-Freiraum, der sich vom Zuführstutzen zum Abführstutzen hin erstreckt und dem ihn durchströmenden Fluid eine um die Längsachse der Heizkammer rotierende, gleichförmige Rotationsbewegung aufprägt. Dadurch wird sichergestellt, dass zumindest in diesem Bereich keine Teil-Volumina entstehen können, in denen nur eine verminderte Vorwärtsbewegung des Fluids vom Zuführ- zum Abführstutzen hin erfolgt.

Vorteilhafterweise besitzen die in der Wand der Heizkammer ausgebildete konkave Sicke und der ihr benachbarte Wendelabschnitt in etwa die gleiche axiale Länge, die sich besonders bevorzugter Weise über nahezu die gesamte axiale Länge der Heizkammer erstreckt, sodass auch an den Stirnenden der Heizkammer keine an der allgemeinen Strömung nicht gleichförmig teilnehmende Teilvolumina entstehen können.

Erfindungsgemäß besitzt die Sicke senkrecht zu ihrer schraubenlinienförmig verlaufenden Längsrichtung einen teilkreisförmigen Querschnitt, der zum Inneren der Heizkammer in offen ist.

Gemäß einer besonders bevorzugten Ausführungsform ist der Heizkörper in Form einer Doppelwendel ausgebildet, deren Wendelabschnitte unterschiedliche Durchmesser aufweisen und bei welcher der eine Wendelabschnitt in dem von dem anderen Wendelabschnitt umschlossenen Raum koaxial angeordnet ist. Dadurch ist es möglich, bei gegebenem Heizkammer-Durchmesser ein wesentlich längeres Mantelrohr unterzubringen und somit einen deutlich verbesserten Wärmeübergang und eine erheblich höhere Heizleistung zu erzielen.

Damit eine möglichst große Oberfläche der Doppelwendel vom Fluid umströmt werden kann, ist gemäß einer bevorzugten Ausführungsform vorgesehen, dass jeder der beiden Wendelabschnitte eine Steigung aufweist, die bewirkt, dass sich seine einander in axialer Richtung benachbarten Windungen gegenseitig nicht berühren. Vorzugsweise ist auch vorgesehen, dass der Innendurchmesser des äußeren Wendelabschnitts um so viel größer als der Außendurchmesser des innen liegenden Wendelabschnitts ist, dass sich ihre Windungen in radialer Richtung nicht berühren. Somit sind sowohl zwischen den Windungen ein und desselben Wendelabschnitts als auch zwischen den zu den verschiedenen Wendelabschnitten gehörenden Windungen ausreichend große Freiräume vorhanden, um einen möglichst großflächigen und gleichförmigen Wärmekontakt zwischen dem Heizkörper und dem zu erhitzenden Fluid sicherzustellen

Weiterhin ist vorzugsweise vorgesehen, dass die beiden Anschlussabschnitte, die für einen Stromanschluss der Heizdrahtspirale nach außen geführt sind, am gleichen axialen Ende der Doppelwendel angeordnet sind und zueinander parallel und radial von innen nach außen verlaufen. Günstiger Weise wird dieses axiale Ende der Doppelwendel in dem Bereich der Heizkammer positioniert, in den das zu erhitzende Fluid frisch von außen her einströmt und daher die niedrigste Temperatur besitzt.

Dabei ist wichtig, über die aus der Heizkammer nach außen geführten Anschlüsse, die dazu dienen, die Heizdrahtspirale mit einer Quelle für elektrische Heizenergie zu verbinden, möglichst wenig Wärme abzuführen, um eine übermäßige Erwärmung der außerhalb der Heizkammer liegenden Teile des Heizgerätes, insbesondere der dort befindlichen Elektronik zu vermeiden.

Vorteilhafterweise erstreckt sich die Heizdrahtspirale nur durch die Wendelabschnitte des Heizkörpers, nicht aber durch seine Anschlussabschnitte. Vielmehr verlaufen in diesen nur niederohmige Verbindungsdrähte, welche die Enden der Heizdrahtspirale mit den Elektroanschlüssen des Heizkörpers verbinden. Dadurch erfolgt in den Anschlussabschnitten keine aktive Heizung.

In diesem Bereich wird also eine "Kühlstrecke" geschaffen, durch welche die Anschlussabschnitte und ihre aus der Heizkammer herausragenden Enden auf der niedrigstmöglichen Temperatur gehalten werden, sodass über sie nur ein geringer Wärmeabfluss und damit die kleinstmögliche Erwärmung der außerhalb der Heizkammer angeordneten Teile des Heizgerätes erfolgt.

Vorzugsweise werden die beiden Wendelabschnitte des Heizkörpers so gewickelt, dass sich einander benachbarte Windungen eines jeden Wendelabschnitts als auch benachbarte Windungen der beiden Wendelabschnitte gegenseitig nicht berühren und zwischen ihnen ausreichend große Freiräume verbleiben, die eine gute Zirkulation des zu erhitzende Fluids in der gesamten Heizkammer und einen großflächigen Wärmekontakt des Fluids mit dem Heizkörper sicherstellen.

Durch die radiale Herausführung der Anschlussabschnitte wird erreicht, dass die Länge der Anschlussabschnitte nicht zur axialen Länge des Heizgerätes beiträgt.

Diese und andere vorteilhafte Ausgestaltungen und Weiterbildungen des erfindungsgemäßen Heizgerätes sind in den Unteransprüchen niedergelegt.

Die Erfindung wird im Folgenden anhand eines Ausführungsbeispiels unter Bezugnahme auf die Zeichnung beschrieben; in dieser zeigen:
- Fig.1: eine perspektivische, auseinandergezogene Darstellung der wesentlichen Komponenten eines erfindungsgemäßen Heizgerätes,
- Fig. 2: einen Vertikalschnitt durch das Heizgerät aus Fig. 1 in der durch die Linie II - II definierten Ebene und
- Fig. 3: eine radiale Draufsicht auf die den Heizkörper des erfindungsgemäßen Heizgerätes aus Fig. 1 bildende Doppelwendel.

Wenn im Folgenden Ausdrücke wie "links", "rechts", "unten", "oben" usw. verwendet werden, so beziehen sich diese ausschließlich auf die Darstellung in den Figuren und sind in keiner Weise einschränkend für die bei der Montage und dem Betrieb des Heizgerätes erfolgende Anordnung bzw. Einbaulage der Komponenten zu verstehen, für die sie verwendet werden.

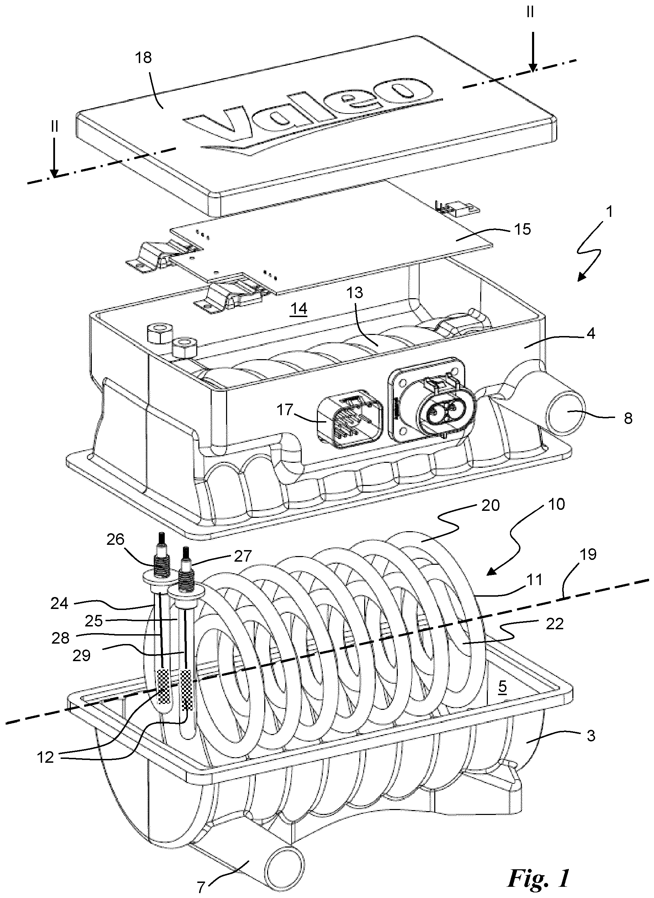

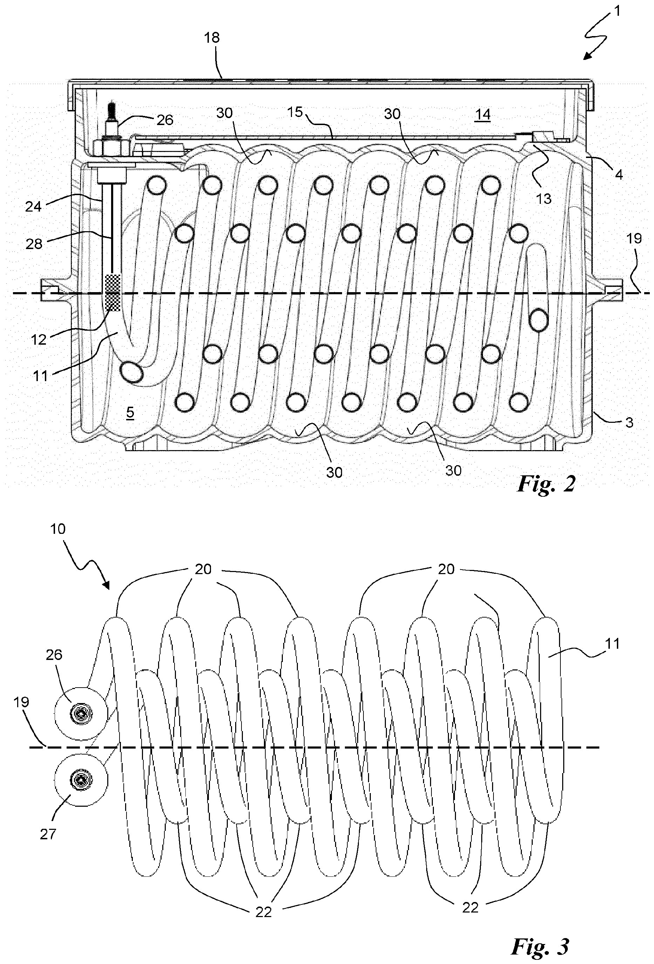

Wie man den Fig. 1 und 2 entnimmt, weist das erfindungsgemäße Heizgerät 1 ein Gehäuse auf, das ein Gehäuseunterteil 3 und ein Gehäuseoberteil 4 umfasst, die in dichter Weise so zusammengebaut werden können, dass sie gemeinsam eine Heizkammer 5 umschließen, die im wesentlichen die Form eines lang gestreckten Zylinders mit in etwa kreisförmigem Querschnitt aufweist und durch die das aufzuheizende Fluid, beispielsweise Wasser strömt. Durch diesen zweischaligen Aufbau des Gehäuses des Heizgerätes 1 ergibt sich eine einfache Montage und eine Minimierung der für das Heizgerät benötigten Einzelteile.

Am Gehäuseunterteil 3 ist ein Fluid-Zuführstutzen 7 vorgesehen, der im Bereich des linken axialen Endes der Heizkammer 5 in diese mündet, während im Bereich des gegenüberliegenden axialen Endes der Heizkammer 5 am Gehäuseoberteil 4 ein Fluid-Abführstutzen 8 positioniert ist. Durch diese Anordnung ist sichergestellt, dass das zu erhitzende Fluid die Heizkammer 5 von links unten nach rechts oben, d.h. sowohl in axialer als auch in radialer und diagonaler Richtung weitestgehend gleichförmig durchströmt und dabei in innigen Wärmekontakt mit dem Heizkörper 10 tritt.

Das Gehäuseoberteil 3 besitzt eine nach unten konkave, lediglich zwei zur Durchführung der Stromversorgung für den Heizkörper 10 dienende, im zusammengebauten Zustand dicht verschlossene Öffnungen aufweisende Trennwand 13 auf, welche die Heizkammer 5 auf ihrer Oberseite ansonsten dicht verschließt. Diese Trennwand 13 bildet gleichzeitig den Boden eines über der Heizkammer 5 befindlichen Abteils 14, das zur Aufnahme einer gedruckten Schaltungsplatine 15 dient, auf der die zur Stromversorgung und Steuerung des Heizgerätes 1 erforderlichen Leiterbahnen und elektrischen und elektronischen Bauelemente (beides nicht dargestellt) untergebracht sind. Die erwähnten Leiterbahnen sind von außen her über einen in Fig. 1 sichtbaren Anschlussstecker 17 zugänglich, über den unter anderem auch die Verbindung mit einer nicht gezeigten, die Heizenergie liefernden Stromquelle erfolgt.

Zum Schutz der gedruckten Schaltungsplatine 15 und der auf ihr befindlichen Bauteile ist das Abteil 14 auf seiner der Trennwand 13 gegenüberliegenden Seite durch einen Deckel 18 verschließbar.

Der eigentliche Heizkörper 10 umfasst ein Mantelrohr 11 mit gleichbleibendem kreisförmigen Querschnitt, in dessen Inneren sich in an sich bekannter Weise eine aus einem Heizdraht gewickelte Heizdrahtspirale 12 erstreckt, die mit einer Quelle für elektrische Heizenergie verbindbar ist, wie dies noch genauer erläutert wird. Zwischen der Innenwand des Mantelrohres 11 und der Heizdrahtspirale 12 vorhandene Leerräume können mit einem gut wärmeleitenden aber elektrisch isolierenden Material ausgefüllt sein.

Das Mantelrohr 11 ist gemäß der Erfindung zu einer Doppelwendel geformt, d.h. es umfasst einen bezüglich einer Längsachse 19 zylinderschraubenförmig, mit in etwa gleichbleibender Steigung gewundenen ersten, äußeren Wendelabschnitt 20, dessen Windungen alle in etwa den gleichen Innen- bzw. Außendurchmesser aufweisen, und einen bezüglich der gleichen Längsachse 19 zylinderschraubenförmig gewundenen zweiten, inneren Wendelabschnitt 22, dessen Windungen ebenfalls alle in etwa einen einheitlichen Innen- bzw. Außendurchmesser aufweisen, wobei letzterer jedoch kleiner als der Innendurchmesser der Windungen des ersten Wendelabschnitts 20 ist.

Der Innendurchmesser der Windungen des zweiten Wendelabschnitts 22 kann in einem Bereich vom 3-fachen bis 6-fachen des Außendurchmessers des Mantelrohrs 11 liegen.

Die Größe der Windungsdurchmesser ist so gewählt, dass sich der zweite Wendelabschnitt 22 innerhalb des vom ersten Wendelabschnitt 20 umschlossenen Volumens koaxial so erstrecken kann, dass sich die Windungen der beiden Wendelabschnitte 20, 22 nicht nur nicht berühren, sondern dass zwischen der äußeren zylindrischen Einhüllenden der Windungen des zweiten Wendelabschnitts 22 und der inneren zylindrischen Einhüllenden der Windungen des ersten Wendelabschnitts 20 in radialer Richtung ein Freiraum vorhanden ist, dessen lichte Weite in einem Bereich vom 1-fachen bis 2-fachen des Durchmessers des Mantelrohres 11 liegt.

Die Steigungen der beiden Wendelabschnitte 20, 22 sind in etwa gleich und so groß, dass zwischen unmittelbar aufeinander folgenden Windungen des gleichen Wendelabschnitts 20 bzw. 22 jeweils ein axialer Abstand vorhanden ist, der zwischen dem 1-fachen und dem 2-fachen des Durchmessers des Mantelrohrs 11 liegt.

Diese Abmessungen dienen dazu, zwischen den verschiedenen Teilen des Heizkörpers 10 ausreichend große Freiräume zu schaffen, die eine ungehinderte Strömung und Zirkulation des zu erhitzenden Fluids sowie einen möglichst großflächigen und innigen Kontakt zwischen dem Fluid und der Außenwand des Mantelrohrs 11 ermöglichen.

An einem der beiden axialen Enden der Doppelwendel geht der erste Wendelabschnitt 20 kontinuierlich in den zweiten Wendelabschnitt 22 so über, dass der Dreh- bzw. Wicklungssinn beibehalten ist. Es ist aber auch eine Variante denkbar, bei welcher der zweite Wendelabschnitt 22 eine zum ersten Wendelabschnitt 20 entgegengesetzte Dreh- bzw. Wicklungsorientierung besitzt.

Am gegenüberliegenden axialen Ende wird jeder der beiden Wendelabschnitte 20, 22 von einem geradlinigen Anschlussabschnitt 24 bzw. 25 fortgesetzt. Die beiden Anschlussabschnitte 24, 25 verlaufen zueinander parallel und bezüglich der Heizkammer 5 radial zur Trennwand 13 hin und in abgedichteter Weise durch diese hindurch; sie weisen an ihrem jeweiligen Ende einen Elektroanschluss 26 bzw. 27 auf.

Wie man insbesondere den Fig. 1 und 2 entnimmt, verlaufen die beiden Anschlussabschnitte 24, 25 in dem Bereich der Heizkammer 5, in den der Fluid-Zuführstutzen 7 mündet, d. h. in welchem das die niedrigste Temperatur besitzende Fluid zirkuliert. Dadurch sind die Anschlussabschnitte 24, 25 die am besten gekühlten Teile des Heizkörpers 10, sodass ein möglichst geringer Wärmeübertrag auf die gedruckte Schaltungsplatine 15 und die auf ihr montierten elektrischen und elektronischen Bauteile erfolgt.

Um diesen Effekt zu verstärken, kann vorgesehen sein, dass sich die Heizdrahtspirale 12, von der der Klarheit halber in den Fig. 1 und 2 jeweils nur die beiden Enden dargestellt sind, zwar vollständig durch das Innere der Wendelabschnitte 20 und 22 nicht aber im Inneren der Anschlussabschnitte 24, 25 erstreckt, sodass diese jeweils nur einen niederohmigen Verbindungsdraht 28, 29 umschließen, der zur Verbindung der Enden der Heizdrahtspirale 12 mit den außerhalb der Heizkammer 5 befindlichen Elektroanschlüssen 26 bzw. 27 dient. Somit werden die Anschlussabschnitte 24, 25 nicht nur dadurch gekühlt, dass sie von dem frisch in die Heizkammer 5 eintretenden Fluid umströmt werden, sondern es wird in ihrem Bereich auch nicht aktiv geheizt.

In Ergänzung hierzu kann vorgesehen sein, dass das den Heizkörper 10 bildende Rohr nur in den Wendelabschnitten 20 und 22 aus einem gut wärmeleitenden Material, insbesondere Metall besteht, während die den niederohmigen Verbindungsdraht 28 bzw. 29 umschließenden Mantelbereiche der Anschlussabschnitte 24, 25 aus einem Material geringer Wärmeleitfähigkeit bestehen sind. Es versteht sich, dass diese aus unterschiedlichen Materialien bestehenden Teile des Mantelrohrs 11 fluiddicht miteinander verbunden sind.

Von besonderer Bedeutung ist, dass, wie man insbesondere der Fig. 2 entnimmt, die die Heizkammer 5 umschließenden Wandbereiche des Gehäuseunterteils 3 und der Zwischenwand 13 mit einer schraubenlinienförmig umlaufenden, zur Heizkammer 5 hin konkaven Nut bzw. Sicke 30 versehen sind, die sich nahezu über die gesamte axiale Länge der Heizkammer 5 erstreckt. Der schraubenlinienförmige Verlauf dieser Sicke 30 besitzt die gleiche Steigung und den gleichen Windungssinn wie der der Sicke 30 unmittelbar benachbarte erste Wendelabschnitt 20 des Mantelrohrs 11.

Die Nut bzw. Sicke 30 ist vorzugsweise nicht nur als Vertiefung in die Innenseite des Gehäuseunterteils 3 und der Zwischenwand 13 eingearbeitet sondern so ausgeformt, dass sie auf der jeweiligen Außenseite erhaben bzw. konvex hervortritt.

Die Sicke 30 besitzt an jeder Stelle ihrer schraubenlinienförmig verlaufenden Längsrichtung einen zu dieser Längsrichtung senkrechten, teilkreisförmigen Querschnitt, der zum Innenraum der Heizkammer 5 hin offen ist. Dabei beträgt die lichte Weite einer jeden Sicken-Windung an der Stelle, an der sie in den Innenraum der Heizkammer 5 übergeht, in etwa das Zwei- bis Dreifache des Durchmessers des Mantelrohrs 11 des Heizkörpers 10, wie dies insbesondere der Fig. 2 entnommen werden kann..

Durch diese erfindungsgemäße Ausbildung der Zylinderwand der Heizkammer 5 wird ein schraubenlinienförmig verlaufender Strömungs-Freiraum mit in etwa gleichbleibender lichter Weite zwischen dem ersten Wendelabschnitt 20 und der Innenseite der Wand der Heizkammer 5 geschaffen, durch den das durch den Zuführstutzen 7 in die Heizkammer 5 eintretende Fluid bzw. Wasser auf seinem Weg zum Abführstutzen 8 in eine Rotations- bzw. Walzenbewegung versetzt wird, die dafür sorgt, dass alle Volumenbereiche des Innenraums der Heizkammer 5 vollständig und gleichförmig vom Fluid durchspült werden. Dadurch wird ein besonders guter und gleichförmiger Wärmeübergang vom Heizkörper 10 auf das Fluid sichergestellt.

## Patentansprüche

1. Elektrisches Heizgerät (1) für ein Fluid, mit einer Heizkammer (5), die von einer in etwa zylindrischen Wand (6) umschlossen ist und in die das Fluid durch einen Zuführstutzen (7) ein- und einen Abführstutzen (8) austritt, und in der sich ein Heizkörper (10) mit einem Mantelrohr (11) befindet, in dessen Innerem sich eine Heizdrahtspirale (12) erstreckt, deren beide Enden mit einer Quelle für elektrische Heizenergie verbindbar sind, wobei das Mantelrohr (11) einen schraubenlinienförmigen Wendelabschnitt (20) umfasst, der so angeordnet ist, dass seine Längsachse (19) mit der Zentralachse der zylindrischen Wand (6) der Heizkammer (5) zusammenfällt, wobei in der zylindrischen Wand (6) der Heizkammer (5) eine sich in axialer Richtung erstreckende, schraubenlinienförmige, zum Innenraum der Heizkammer (5) hin konkave Sicke (30) ausgebildet ist, welche die gleiche Steigung und den gleichen Windungssinn wie der ihr unmittelbar benachbarte Wendelabschnitt (20) des Mantelrohrs (11) aufweist, **dadurch gekennzeichnet, dass** die Sicke (30) senkrecht zu ihrer schraubenlinienförmig verlaufenden Längsrichtung einen teilkreisförmigen Querschnitt besitzt, der zum Inneren der Heizkammer hin offen ist, und dass zwischen der Außenseite des Wendelabschnitts (20) und der Wand (6) der Heizkammer (5) ein schraubenlinienförmiger Strömungs-Freiraum mit in etwa gleichbleibender lichter Weite vorhanden ist.

2. Elektrisches Heizgerät (1) nach Anspruch 1, **dadurch gekennzeichnet, dass** der Wendelabschnitt (20) des Mantelrohrs (11) und die Sicke (30) in etwa die gleiche axiale Länge aufweisen. 1f

3. Elektrisches Heizgerät (1) nach einem der vorhergehenden Ansprüche, **dadurch gekennzeichnet, dass** das Mantelrohr (11) des Heizkörpers (10) einen zweiten schraubenlinienförmigen Wendelabschnitt (22) umfasst, der sich koaxial zum erstgenannten Wendelabschnitt (20) innerhalb des von diesem umschlossenen Raums erstreckt und an einem axialen Ende zur Bildung einer Doppelwendel in diesen übergeht, während an dem anderen axialen Ende eines jeden Wendelabschnitts (20, 22) ein Anschlussabschnitt (24, 25) vorgesehen ist, der dazu dient, eines der Enden der Heizdrahtspirale (12) aus der Heizkammer (5) herauszuführen, 1f

4. Elektrisches Heizgerät (1) nach Anspruch 3, **dadurch gekennzeichnet, dass** jeder der beiden Wendelabschnitte (20, 22) eine solche Steigung aufweist, dass sich seine einander in axialer Richtung benachbarten Windungen gegenseitig nicht berühren. 1f

5. Elektrisches Heizgerät (1) nach einem der Ansprüche 3 oder 4, **dadurch gekennzeichnet, dass** der Innendurchmesser des ersten Wendelabschnitts (20) um so viel größer als der Außendurchmesser des zweiten Wendelabschnitts (22) ist, dass sich ihre Windungen in radialer Richtung nicht berühren. 1f

6. Elektrisches Heizgerät (1) nach einem der Ansprüche 3 bis 5, **dadurch gekennzeichnet, dass** die Windungen des ersten und des zweiten Wendelabschnitts (20, 22) in etwa die gleiche Steigung aufweisen.

7. Elektrisches Heizgerät (1) nach einem der Ansprüche 3 bis 6, **dadurch gekennzeichnet, dass** in radialer Projektion gesehen Windungen des ersten Wendelabschnitts (20) und Windungen des zweiten Wendelabschnitts (22) alternierend aufeinanderfolgen. 1f

8. Elektrisches Heizgerät nach einem der Ansprüche 3 bis 7, **dadurch gekennzeichnet, dass** die beiden Anschlussabschnitte (24, 25) in dem Bereich der Heizkammer (5) positioniert sind, in den der Fluid-Zuführstutzen (7) mündet. 1f

9. Elektrisches Heizgerät (1) nach einem der Ansprüche 3 bis 8, **dadurch gekennzeichnet, dass** im Inneren eines jeden Anschlussabschnittes (24 bzw. 25) keine Heizdrahtspirale (12) sondern lediglich ein die Heizdrahtspirale (12) mit einem zugehörigen Elektroanschluss (26, 27) verbindender, niederohmiger Verbindungsdraht (28 bzw. 29) vorgesehen ist. 1f

10. Elektrisches Heizgerät (1) nach einem der Ansprüche 3 bis 9, **dadurch gekennzeichnet, dass** die beiden Anschlussabschnitte (24, 25) geradlinig und zueinander parallel sowie senkrecht zur Längsachse (19) der Doppelwendel verlaufen.

11. Elektrisches Heizgerät (1) nach einem der Ansprüche 3 bis 10, **dadurch gekennzeichnet, dass** das Mantelrohr (11) des Heizkörpers (10) in den Bereichen der Anschlussabschnitte (24, 25) aus einem anderen Material besteht als in den Bereichen der Wendelabschnitte (20, 22), wobei das Material in den Bereichen der Anschlussabschnitte (24, 25) eine geringere Wärmeleitfähigkeit aufweist als das Material in den Bereichen der Wendelabschnitte (20, 22).

12. Elektrisches Heizgerät (1) nach einem der vorhergehenden Ansprüche, **dadurch gekennzeichnet, dass** der Fluid-Zuführ Stutzen (7) im Bereich des einen axialen Endes des vom Fluid durchströmten Hohlraums (5) und der Fluid-Abführstutzen (8) im Bereich des diesem axialen Ende gegenüberliegenden axialen Endes des vom Fluid durchströmten Hohlraums (5) angeordnet ist.

13. Elektrisches Heizgerät (1) nach einem der Ansprüche 3 bis 12, **dadurch gekennzeichnet, dass** die axiale Länge des die Doppelwendel und die an ihrem einen axialen Ende angeordneten Anschlussabschnitte (24, 25) umfassenden Heizkörpers (10) umso viel kleiner als die axiale Länge der Heizkammer (5) ist, dass an beiden axialen Enden des Heizkörpers (10) jeweils ein Strömungsfreiraum für das Fluid verbleibt.

## Claims

1. An electric heater (1) for a fluid, comprising a heating chamber (5) which is enclosed by a substantially cylindrical wall (6) and into which the fluid enters through a supply port (7) and exits through a discharge port (8), and in which there is a heating body (10) with a jacket tube (11), inside which extends a heating wire helix (12), both ends of which are connectable to a source of electrical heating energy, wherein the jacket tube (11) comprises a helical coil section (20) arranged so that its longitudinal axis (19) coincides with the central axis of the cylindrical wall (6) of the heating chamber (5),
wherein a helical bead (30) is formed in the cylindrical wall (6) of the heating chamber (5), extending in the axial direction and concave towards the interior of the heating chamber (5), which bead (30) has the same pitch and the same winding sense as the helical section (20) of the jacket tube (11) directly adjacent thereto,
**characterized in that** the bead (30) has a part-circular cross-section perpendicular to its helically extending longitudinal direction, which is open towards the interior of the heating chamber (5), and
that between the outside of the helical section (20) and the wall (6) of the heating chamber (5) there is a helical flow clearance with an approximately constant clear width.

2. An electric heater (1) according to claim 1, **characterized in that** the helical section (20) of the jacket tube (11) and the bead (30) have approximately the same axial length.

3. An electric heater (1) according to any one of the preceding claims, **characterized in that** the jacket tube (11) of the heater (10) comprises a second helical coil section (22) extending coaxially with the first-mentioned coil section (20) within the space enclosed by the latter and merging into the latter at one axial end to form a double helix, while at the other axial end of each coil section (20, 22), a connecting section (24, 25) is provided for leading one of the ends of the heating wire spiral (12) out of the heating chamber (5).

4. An electric heater (1) according to claim 3, **characterized in that** each of the two coil sections (20, 22) has such a pitch that its turns adjacent to each other in the axial direction do not touch each other.

5. An electrical heater (1) according to one of claims 3 or 4, **characterized in that** the inner diameter of the first helical section (20) is so much larger than the outer diameter of the second helical section (22) that their turns do not touch in the radial direction.

6. An electrical heater (1) according to any one of claims 3 to 5, **characterized in that** the turns of the first and second helical sections (20, 22) have approximately the same pitch.

7. A electrical heater (1) according to one of claims 3 to 6, **characterized in that**, viewed in radial projection, turns of the first helical section (20) and turns of the second helical section (22) follow one another alternately.

8. An electrical heater (1) according to any one of claims 3 to 7, **characterized in that** the two connection sections (24, 25) are positioned in the region of the heating chamber (5) into which the fluid supply nozzle (7) opens.

9. An electrical heater (1) according to one of the claims 3 to 8, **characterized in that** inside each connection section (24 or 25) there is no heating wire coil (12) but only a low-resistance connecting wire (28 or 29) connecting the heating wire coil (12) to an associated electrical connection (26, 27).

10. An electrical heater (1) according to one of the claims 3 to 9, **characterized in that** the two connection sections (24, 25) run rectilinearly and parallel to one another and perpendicular to the longitudinal axis (19) of the double helix.

11. An electrical heater (1) according to one of the claims 3 to 10, **characterized in that** the jacket tube (11) of the heater (10) in the regions of the connection sections (24, 25) consists of a different material than in the regions of the coil sections (20, 22), the material in the regions of the connection sections (24, 25) having a lower thermal conductivity than the material in the regions of the coil sections (20, 22).

12. An electrical heater (1) according to one of the preceding claims, **characterized in that** the fluid supply connection piece (7) is arranged in the region of one axial end of the cavity (5) through which the fluid flows and the fluid discharge connection piece (8) is arranged in the region of the axial end, opposite this axial end, of the cavity (5) through which the fluid flows.

13. An electrical heater (1) according to one of claims 3 to 12, **characterized in that** the axial length of the heater body (10) comprising the double helix and the connection sections (24, 25) arranged at one axial end thereof is so much smaller than the axial length of the heating chamber (5) that a flow-free space for the fluid remains at each of the two axial ends of the heater body (10).

## Revendications

1. Appareil de chauffage électrique (1) pour un fluide, comprenant une chambre de chauffage (5) qui est entourée d'une paroi approximativement cylindrique (6) et dans laquelle le fluide entre par une tubulure d'alimentation (7) et sort par une tubulure d'évacuation (8), et dans laquelle se trouve un corps de chauffage (10) avec un tube d'enveloppe (11) à l'intérieur duquel s'étend une spirale de fil de chauffage (12), dont les deux extrémités peuvent être reliées à une source d'énergie électrique de chauffage, le tube d'enveloppe (11) comprenant une partie hélicoïdale (20) qui est disposée de telle sorte que son axe longitudinal (19) coïncide avec l'axe central de la paroi cylindrique (6) de la chambre de chauffage (5),
dans la paroi cylindrique (6) de la chambre de chauffage (5) étant formée une moulure hélicoïdale (30) s'étendant dans la direction axiale, concave en direction de l'espace intérieur de la chambre de chauffage (5), qui présente le même pas et le même sens d'enroulement que la section hélicoïdale (20) du tube à enveloppe (11) qui lui est directement voisine,
**caractérisé**
**en ce que** la moulure (30) possède, perpendiculairement à sa direction longitudinale s'étendant en forme d'hélice, une section transversale partiellement circulaire qui est ouverte vers l'intérieur de la chambre de chauffage (5), et
**en ce qu'**il existe, entre le côté extérieur de la section hélicoïdale (20) et la paroi (6) de la chambre de chauffage (5), un espace libre d'écoulement en forme d'hélice avec une largeur libre à peu près constante.

2. Appareil de chauffage électrique (1) selon la revendication 1, **caractérisé en ce que** la section hélicoïdale (20) du tube d'enveloppe (11) et la moulure (30) présentent à peu près la même longueur axiale.

3. Appareil de chauffage électrique (1) selon l'une quelconque des revendications précédentes, **caractérisé en ce que** le tube d'enveloppe (11) du corps de chauffe (10) comprend une deuxième portion d'hélice hélicoïdale (22) qui s'étend coaxialement à la première portion d'hélice (20) mentionnée à l'intérieur de l'espace entouré par celle-ci et qui se raccorde à celle-ci à une extrémité axiale pour former une double hélice, tandis qu'à l'autre extrémité axiale de chaque portion d'hélice (20, 22) est prévue une portion de raccordement (24, 25) qui sert à faire sortir l'une des extrémités de l'hélice de fil chauffant (12) de la chambre de chauffage (5).

4. Appareil de chauffage électrique (1) selon la revendication 3, **caractérisé en ce que** chacun des deux portions de filament (20, 22) présente un pas tel que ses spires voisines dans la direction axiale ne se touchent pas mutuellement.

5. Appareil de chauffage électrique (1) selon l'une des revendications 3 ou 4, **caractérisé en ce que** le diamètre intérieur de la première portion d'hélice (20) est suffisamment supérieur au diamètre extérieur de la deuxième portion d'hélice (22) pour que leurs spires ne se touchent pas dans la direction radiale.

6. Appareil de chauffage électrique (1) selon l'une des revendications 3 à 5, **caractérisé en ce que** les spires du premier et du deuxième portion de spire (20, 22) présentent à peu près le même pas.

7. Appareil de chauffage électrique (1) selon l'une des revendications 3 à 6, **caractérisé en ce que**, en projection radiale, les spires de la première portion d'hélice (20) et les spires de la deuxième portion d'hélice (22) se succèdent en alternance.

8. Appareil de chauffage électrique selon l'une des revendications 3 à 7, **caractérisé en ce que** les deux portions de raccordement (24, 25) sont positionnées dans la zone de la chambre de chauffage (5) dans laquelle débouche la tubulure d'alimentation en fluide (7).

9. Appareil de chauffage électrique (1) selon l'une des revendications 3 à 8, **caractérisé en ce qu'**il n'est pas prévu de spirale de fil chauffant (12) à l'intérieur de chaque portion de raccordement (24 ou 25), mais uniquement un fil de liaison (28 ou 29) de faible résistance reliant la spirale de fil chauffant (12) à un raccordement électrique (26, 27) correspondant.

10. Appareil de chauffage électrique (1) selon l'une des revendications 3 à 9, **caractérisé en ce que** les deux portions de raccordement (24, 25) sont rectilignes et parallèles entre elles et perpendiculaires à l'axe longitudinal (19) de la double hélice,

11. Appareil de chauffage électrique (1) selon l'une des revendications 3 à 10, **caractérisé en ce que** le tube d'enveloppe (11) du corps de chauffe (10) est constitué, dans les zones des portions de raccordement (24, 25), d'un autre matériau que dans les zones des portions d'hélice (20, 22), le matériau dans les zones des portions de raccordement (24, 25) présentant une conductivité thermique inférieure à celle du matériau dans les zones des portions d'hélice (20, 22).

12. Appareil de chauffage électrique (1) selon l'une des revendications précédentes, **caractérisé en ce que** la tubulure d'alimentation de fluide (7) est disposée dans la zone d'une extrémité axiale de la cavité (5) traversée par le fluide et la tubulure d'évacuation de fluide (8) dans la zone de l'extrémité axiale opposée à cette extrémité axiale de la cavité (5) traversée par le fluide,

13. Appareil de chauffage électrique (1) selon l'une des revendications 3 à 12, **caractérisé en ce que** la longueur axiale du corps de chauffe (10) comprenant la double hélice et les portions de raccordement (24, 25) disposées à l'une de ses extrémités axiales est tellement plus petite que la longueur axiale de la chambre de chauffe (5) qu'il reste à chaque fois un espace libre d'écoulement pour le fluide aux deux extrémités axiales du corps de chauffe (10).
